# FASCICULE DE BREVET EUROPEEN

(11) **EP 2 213 534 B1**
(45) Date de publication et mention de la délivrance du brevet: **15.06.2016**
(21) Numéro de dépôt: 10150924.8
(22) Date de dépôt: 18.01.2010
(51) Int. Cl.: B60T 8/17, B60T 13/74

(54) **Procédé de commande d'un frein de véhicule avec correction en couple adaptative**
Verfahren zur Steuerung einer Fahrzeugbremse mit adaptativer Drehmomentkorrektur
Method for controlling a vehicle brake with adaptive torque correction

(30) Priorité: 16.01.2009 FR 0900191
(43) Date de publication de la demande: 04.08.2010
(73) Titulaire: Messier-Bugatti-Dowty, 78140 Vélizy-Villacoublay (FR)
(72) Inventeur: Onfroy, Dominique, 92100, BOULOGNE BILLANCOURT (FR)
(74) Mandataire: Parzy, Benjamin Alain

(56) Documents cités:
- EP-A- 1 695 887
- EP-A1- 2 017 149
- WO-A-2005/100113
- DE-A1- 19 536 694
- US-A1- 2005 001 474

## Description

L'invention concerne un procédé de commande d'un frein de véhicule avec correction en couple adaptative.

### ARRIERE-PLAN DE L'INVENTION

Les systèmes de freinage pour véhicule comportent des actionneurs de freinage (hydrauliques ou électromécaniques) pour appliquer aux roues du véhicule un couple de freinage tendant à ralentir le véhicule.

La plupart des commandes de frein connues en aéronautique utilisent une consigne, qui est traduite soit en une pression dans le cas des freins hydrauliques, soit en un effort à appliquer ou un déplacement du poussoir dans le cas de freins à actionneurs électromécaniques.

Des commandes utilisant une consigne de couple et organisant une boucle de rétroaction sur la base du couple mesuré ont été proposées, comme dans le document US 2005/0001474. Ces commandes présentent l'avantage de prendre en compte globalement l'action du frein via le contrôle du couple qu'il génère, en permettant une adaptation aux dispersions de la réponse en couple du frein pour un effort de freinage donné.

Cependant, ces commandes à bande passante élevée peuvent interférer avec la protection anti-blocage des roues, notamment en cas de déphasage entre les commandes en couple et les commandes de l'anti-blocage. Dans certaines conditions d'adhérence, la commande en couple envoie une consigne de couple temporairement nulle pour éviter le blocage des roues. Mais si la roue se bloque intempestivement, le couple mesuré s'annule brutalement et le couple mesuré est alors égal à la consigne de couple nul. La roue reste ainsi bloquée, sans que le frein ne soit commandé pour relâcher la roue.

Un procédé selon le préambule de la revendication indépendante 1 est connu du document EP 2 017 149 A1.

### OBJET DE L'INVENTION

L'invention a pour objet une commande de frein en utilisant une consigne d'effort ou de position, mais tenant néanmoins compte du couple mesuré.

### BREVE DESCRIPTION DE L'INVENTION

L'invention est réalisée par un procédé selon la revendication indépendante 1 et un dispositif selon la revendication indépendante 6.

En vue de la réalisation de l'invention, on propose un procédé de commande d'un frein de véhicule adapté à exercer un effort de freinage en réponse à une consigne d'actionnement, dans lequel :
- à partir d'une consigne de freinage, on détermine une consigne nominale d'actionnement de l'actionneur du frein tenant compte de toutes les composantes de la consigne de freinage ;
- à partir de cette même consigne de freinage, et d'une mesure du couple développé par le frein, on détermine une correction de la consigne nominale d'actionnement, la correction ne tenant compte que des évolutions de basse fréquence de la consigne de freinage
- on applique la correction à la consigne nominale d'actionnement.

Ainsi, on contrôle bien le frein selon la consigne de freinage, et non en couple. La mesure du couple sert ici seulement à produire une correction à basse fréquence de la consigne nominale d'actionnement qui est elle calculée tenant compte des composantes haute fréquence de la consigne de freinage.

La correction basse fréquence ainsi proposée permet de réduire les dispersions en couple de freinage pour une consigne de freinage donnée, qui peuvent être causées par le dispersion de l'effort de freinage appliqué ou à une dispersion de la réponse en couple du frein à l'effort de freinage appliqué.

En outre, la correction basse fréquence ainsi proposée reste compatible avec une protection d'anti-blocage qui module à haute fréquence la consigne de freinage pour éviter le blocage de la roue.

Un des avantages de l'invention est de permettre un fonctionnement dégradé du frein en cas de perte du capteur de couple. La correction est alors arbitrairement annulée ou maintenue à sa valeur courante, et le frein est alors régulé uniquement en fonction de la consigne de freinage.

Dans le cas particulier d'une consigne de position, la correction en couple selon l'invention permet de compenser les dilatations thermiques qui peuvent faire varier l'effort appliqué par le frein.

Avantageusement, la correction en couple est adaptative et tient compte des conditions de fonctionnement du frein ou des freins environnants, notamment ceux portés par le même atterrisseur et recevant la même consigne de freinage.

### BREVE DESCRIPTION DES DESSINS

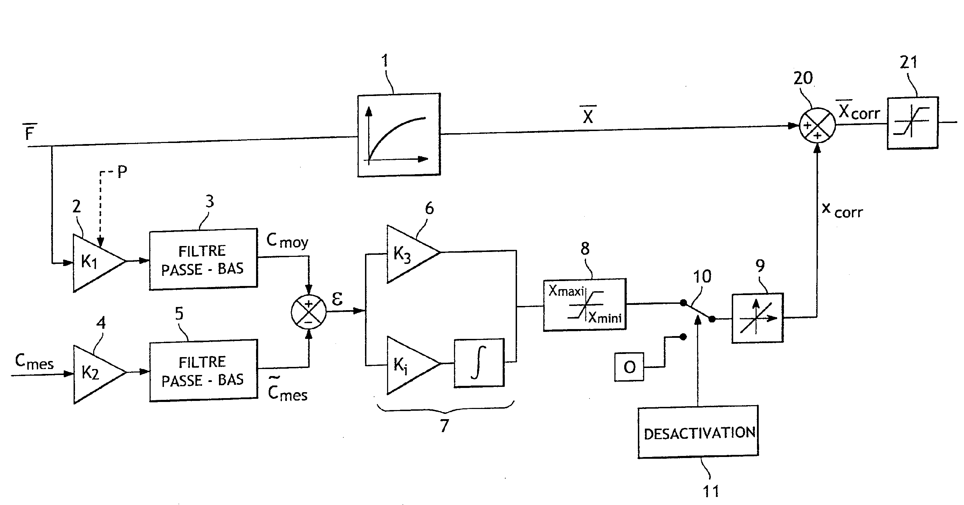

L'invention sera mieux comprise à la lumière de la description qui suit en référence à l'unique figure présente un schéma-bloc d'un mode particulier de mise en oeuvre du procédé de l'invention.

### DESCRIPTION DETAILLEE DE L'INVENTION

L'invention est ici décrite en application à un frein d'aéronef de type comportant des actionneurs électromécaniques commandés en déplacement. Un calculateur (non représenté) génère une consigne de freinage *F̅*. Cette consigne est corrigée à haute fréquence par un système de protection anti-blocage qui, vérifiant en permanence le taux de glissement de la roue, détecte un éventuel départ au blocage de la roue et diminue en conséquence la consigne de freinage F pour éviter le blocage de la roue.

De façon connue en soi, un convertisseur 1 transforme la consigne de freinage *F̅* en une consigne de position *X̅* pour le poussoir de l'actionneur, ici selon un modèle non-linéaire 1. Le calcul de la consigne de position *X̅* est ici réalisée à une fréquence de calcul élevée compatible avec la vitesse de fonctionnement de la protection d'anti-blocage, de sorte que la consigne de position *X̅* tient compte à la fois des composantes basse fréquence et des composantes haute fréquence de la consigne de freinage *F̅*.

Selon l'invention, on calcule une correction de position basse-fréquence *x_{corr}*, que l'on ajoute au moyen du sommateur 20 à la consigne de position *X̅* pour obtenir la consigne de position corrigée *X̅_{corr}* = *X̅* + *x_{corr}*. Cette correction de position *x_{corr}* tient compte du couple mesuré selon les modalités suivantes.

On élabore tout d'abord une image d'un couple moyen *C_{moy}* correspondant à la consigne de freinage *F̅*. A cet effet, la consigne de freinage *F̅* est fournie à un étage proportionnel 2 de gain K1 pour la rendre comparable à un couple, puis est soumise à un premier filtre passe-bas 3 pour en éliminer toutes les composantes haute fréquence, et notamment celles qui sont dues à la mise en oeuvre de la protection d'anti-blocage.

Par ailleurs, on utilise une mesure du couple *Cₘₑₛ* réellement exercé par le frein qui est fournie à un étage proportionnel 4 de gain K2, puis est soumise à un deuxième filtre passe-bas 5 pour éliminer toutes les composantes haute fréquence ainsi que les bruits de mesure. On obtient un couple mesuré calibré *C̃ₘₑₛ*.

Le couple moyen *C_{moy}* et le couple mesuré calibré *C̃ₘₑₛ* sont fournis en entrée d'un comparateur qui génère une erreur ε. Cette erreur est soumise à un traitement, en étant fournie à un contrôleur comportant une action proportionnelle 6 de gain K3, une action intégrale 7, et enfin un étage de saturation 8 ayant pour but de restreindre la correction à des valeurs comprises dans l'intervalle [*x*ₘᵢₙ,*x*ₘₐₓ]. Cette saturation évite les corrections trop importantes qui perturberaient le bon fonctionnement du frein ou conduiraient à appliquer un effort trop élevé supérieur à un effort limite admissible pour le frein.

De préférence, et de façon connue en soi, l'action intégrale 7 comporte une protection d'anti-emballement qui fige l'action intégrale lorsque la correction est saturée par l'étage de saturation 8, de façon à éviter l'incrémentation de l'intégrale de l'erreur ε tant que la correction est saturée.

La sortie de l'étage de saturation 8 est alors fournie à un limiteur de pente 9, qui a pour fonction de garantir des variations progressives de la correction. On obtient ainsi la correction de position recherchée *x_{corr}*.

Lorsque l'aéronef est à l'arrêt, un effort de freinage peut être néanmoins appliqué, par exemple pour maintenir l'aéronef immobilisé au parking. L'effort ainsi appliqué conduirait à un couple moyen *C_{moy}* non nul, alors que le couple mesuré *Cₘₑₛ* est nul, ou très faible Dans une telle situation, l'erreur de couple serait grande et conduirait à une correction importante, augmentant encore le déplacement du poussoir des actionneurs, et contribuant ainsi à augmenter l'effort appliqué. Pour éviter une telle situation, on neutralise la correction. Pour effectuer cette neutralisation, on prévoit un commutateur 10 commandé par un organe de désactivation de la correction 11, qui permet de commuter l'entrée du limiteur de pente 9 à une valeur fixe, ici choisie égale à zéro. Cette commutation permet également de neutraliser la correction lorsqu'il est détecté que le capteur de couple fournissant la mesure de couple *C̃ₘₑₛ* est défaillant. Le limiteur de pente 9 disposé en aval du commutateur 10 permet d'éviter les à-coups de correction lors d'une telle commutation, et lors d'une commutation inverse.

Avantageusement, en complément comme illustré ici, ou en remplacement de l'étage de saturation 8, on prévoit un étage saturateur 21 pour saturer la consigne corrigée *X_{corr}* afin de garantir que la consigne corrigée reste dans des niveaux compatibles avec l'intégrité mécanique des composants du freins.

Selon l'invention, on utilise un gain K1 variable qui permet d'adapter la correction de couple aux conditions de fonctionnement du frein, en fonction d'un certain nombre de paramètres tels que la vitesse de l'aéronef, ou le point de fonctionnement du frein, en utilisant un modèle numérique adéquat. La variation du gain K1 permet d'adapter l'estimation du couple moyen *C_{moy}* aux conditions de fonctionnement actuelles ou à venir du frein. L'objectif de cette adaptation est de limiter les phases de fonctionnement pour lesquelles la consigne corrigée est saturée. En effet, si la saturation de la correction est nécessaire pour les raisons déjà exposées, le fonctionnement en mode saturé, ayant pour résultat une correction imparfaite de la réponse en couple, n'est évidemment pas le mode de fonctionnement recherché.

Avantageusement, on pourra tenir compte non seulement de paramètres du frein en question, mais de paramètres relatifs à d'autres freins notamment ceux qui reçoivent la même consigne de freinage, ce qui permet d'assurer une uniformisation de l'usure ou de l'échauffement des freins.

Ainsi, et selon une première stratégie d'adaptation, on vérifie si la consigne de position corrigée est ou non saturée par l'étage saturateur 21 (ou par l'étage saturateur 8 suivant le mode de réalisation) à la borne maximale de saturation. Une telle saturation signifie que le couple moyen *C_{moy}* a été surestimé par rapport au couple moyen que le frein est réellement capable de délivrer, ce qui peut survenir sur certains types de freinage pour lesquels la réponse en couple du frein est plus faible que la réponse nominale. Pour remédier à cette surestimation, on abaisse la valeur du gain K1. Ainsi, l'estimation du couple moyen *C_{moy}* est plus basse pour une même consigne d'effort, ce qui permet de faire revenir la correction *x_{corr}* dans une plage de fonctionnement non saturée, en faisant en sorte que le couple moyen *C_{moy}* associé à la consigne *F̅* maximale corresponde au couple maximal pouvant être réellement développé par le frein pour les conditions particulières du freinage en cours.

Selon une variante de cette première stratégie, on abaisse le gain K1 de l'ensemble des freins soumis à la même consigne de freinage *F̅*, par exemple tous les freins des roues portées par un atterrisseur. Cette adaptation permet de provoquer une uniformisation des couples générés par les freins concernés.

Bien sûr, en cas de saturation de la consigne corrigée à la borne minimale de saturation, il conviendra non plus d'abaisser le gain K1, mais au contraire de l'augmenter.

Selon maintenant une deuxième stratégie d'adaptation, on adapte le gain K1 en fonction de paramètres représentatifs d'un freinage à venir. Il est connu que la réponse en couple d'un frein est influencée par sa température initiale et par l'énergie de freinage à dissiper. Ainsi, le coefficient K1 peut être adapté en fonction de la température initiale moyenne des freins de l'aéronef et/ou de la vitesse et la masse de l'aéronef (représentatifs de l'énergie de freinage), de sorte que le couple moyen *C_{moy}* associé à la consigne *F̅* maximale corresponde au couple maximal pouvant être réellement développé par les freins pour les conditions particulières du freinage à venir.

Selon maintenant une troisième stratégie, on tient compte des disparités de conditions initiales des différents freins recevant la même consigne de freinage. Il se peut en effet qu'en début de freinage tous les freins n'aient pas la même température ou le même degré d'usure. Ayant des conditions initiales différentes, les différents freins développeront au freinage suivant, pour une consigne identique, des couples différents, et subiront donc des échauffements différents, pouvant accroître les disparités de températures entre freins. L'adaptation du coefficient K1 permet de réduire ces disparités en sollicitant préférentiellement les freins les moins chauds ou les moins susceptibles de s'échauffer (en particulier les freins neufs).

Par exemple, si un frein chauffe plus que les autres lors d'un premier freinage, il pourra alors présenter une réponse en couple plus importante lors du freinage suivant, contribuant à un échauffement additionnel plus important que celui des autres freins. Pour éviter cet inconvénient, il est possible, en remarquant avant le freinage que ce frein est plus chaud que les autres, de baisser le gain K1 de ce frein de sorte que le couple *C_{moy}* demandé pour ce frein soit diminué. Le frein est ainsi moins sollicité que les autres et s'échauffe moins que les autres, de sorte que les températures des freins concernés s'uniformisent.

L'invention n'est pas limitée à ce qui vient d'être décrit, mais bien au contraire englobe toute variante entrant dans le cadre défini par les revendications.

En particulier, bien que l'on ait illustré l'invention en relation avec des freins à actionneurs électromécaniques commandés en position, l'invention s'applique plus généralement à tout autre type de commande. On peut par exemple générer des consignes d'actionnement en effort pour des freins de ce même type, ou en pression pour des freins hydrauliques, ces consignes d'actionnement étant corrigées selon l'invention au moyen d'une mesure du couple généré par le frein.

Bien que l'on ait ici indiqué que la correction passait subitement à la valeur nulle lorsque la correction était neutralisée, on pourra prévoir d'autres désactivations de la correction, par exemple en maintenant la dernière valeur de correction avant la neutralisation, puis, lorsque la correction est réactivée, en repartant de ladite dernière valeur. On peut neutraliser la correction par d'autres moyens, par exemple en utilisant un sommateur 20 conditionnel qui arrête de sommer la correction de position *x_{corr}* à la consigne de position *X̅* en réponse à un ordre de neutralisation de la correction.

Bien que l'on ait indiqué ici que l'adaptation de la correction en couple aux conditions de freinage se faisait en faisant varier l'estimation du couple moyen développé par le frein, en particulier en utilisant un gain K1 variable, on pourra bien sûr utiliser d'autres stratégies d'adaptation.

Bien que l'on ait utilisé ici un contrôleur de type proportionnel-intégral, on pourra utiliser d'autres types de contrôle, par exemple proportionnel-intégral-dérivateur, ou autre.

Bien que l'on ait filtré indépendamment l'image du couple moyen *C_{moy}* et la mesure de couple *C̃ₘₑₛ* par deux filtres passe-bas indépendants, on pourra également supprimer ces deux filtres pour les remplacer par un unique filtre passe-bas disposé en aval du comparateur pour filtrer l'erreur ε.

Enfin, bien que l'ont ait indiqué que, pour déterminer la correction *x_{corr}* de la consigne de position, l'on utilise la consigne de freinage *F̅* qui contient la correction d'antiblocage et dont on extrait les composantes de basse fréquence par un filtre passe-bas, on pourra déterminer cette correction de position autrement, par exemple en utilisant la consigne de freinage basse fréquence prise avant sa correction haute-fréquence par le dispositif de protection antiblocage (la consigne de freinage basse fréquence peut par exemple provenir des pédales du pilote ou de la consigne de décélération lors d'un freinage en mode automatique dit « autobrake »). La consigne nominale *X̅* sera elle déterminée en partant d'une entrée qui est la somme de la consigne de freinage basse fréquence à laquelle on ajoute la correction d'antiblocage à haute fréquence.

## Revendications

1. Procédé de commande d'un frein de véhicule adapté à exercer un effort de freinage en réponse à une consigne d'actionnement, dans lequel :
- à partir d'une consigne de freinage (*F̅*), on détermine une consigne nominale d'actionnement (*X̅*) de l'actionneur du frein tenant compte de toutes les composantes de la consigne de freinage ;
- à partir de cette même consigne de freinage (*F̅*), et d'une mesure du couple (*Cₘₑₛ*) développé par le frein, on détermine une correction (*x_{corr}*) de la consigne nominale d'actionnement, la correction ne tenant compte que des évolutions de basse fréquence de la consigne de freinage;
- on ajoute la correction à la consigne nominale pour obtenir une consigne d'actionnement corrigée (*X̅_{corr}*);
la correction étant adaptée pour tenir compte de conditions de fonctionnement actuelles ou à venir au moins dudit frein ou des freins soumis à la même consigne de freinage de sorte à limiter des phases de fonctionnement lors desquelles la correction et/ou la consigne d'actionnement corrigée est saturée (8, 21 , dans lequel, pour déterminer la correction, on construit une image du couple moyen (*C_{moy}*) appliqué par le frein à partir de la consigne de freinage (*F̅*), et on compare ce couple moyen à la mesure du couple (*Cₘₑₛ*),
dans lequel l'adaptation de la correction est effectuée en faisant varier l'estimation du couple moyen (*C_{moy}*) pour une même consigne de freinage (*F̅*), dans lequel le couple moyen (*C_{moy}*) est estimé à partir de la consigne de freinage (*F̅*) en multipliant celle-ci par un gain (K1) de valeur réglable,
**caractérisé en ce que**
si la consigne de position corrigée et/ou la correction est saturée à une borne maximale de saturation, on abaisse la valeur du gain (K1), et
si la consigne de position corrigée (*X̅_{corr}*) et/ou la correction est saturée à une borne minimale de saturation, on augmente la valeur du gain (K1).

2. Procédé selon la revendication 1, dans lequel on adapte le gain (K1) en fonction de paramètres représentatifs d'un freinage à venir.

3. Procédé selon la revendication 2, dans lequel on adapte le gain (K1) en fonction de la température initiale moyenne des freins de l'aéronef et/ou de la vitesse et de la masse de l'aéronef.

4. Procédé selon la revendication 1, dans lequel on adapte le gain (K1) en fonction de disparités de conditions initiales des différents freins recevant la même consigne de freinage.

5. Procédé selon la revendication 4, dans lequel on adapte le gain (K1) de sorte à solliciter préférentiellement les freins les moins chauds ou les moins susceptibles de s'échauffer.

6. Dispositif pour la mise en oeuvre du procédé de l'une des revendications précédentes, comportant:
- une entrée pour recevoir une consigne de freinage (*F̅*);
- une entrée pour recevoir une mesure du couple (*Cₘₑₛ*) généré par le frein;
- des moyens de calcul, à partir de la consigne de freinage (*F̅*), d'une consigne nominale d'actionnement (*X̅*) de l'actionneur du frein ;
- des moyens de calcul, à partir de la consigne de freinage (*F̅*) et de la mesure du couple (*Cₘₑₛ*), d'une correction (*x_{corr}*) de la consigne nominale d'actionnement ne tenant compte que des évolutions de basse fréquence de la consigne de freinage, les moyens de calcul de la correction tenant compte de conditions de fonctionnement actuelles ou à venir au moins du frein, ou des freins recevant la même consigne de freinage, pour adapter la correction de sorte à limiter des phases de fonctionnement lors desquelles la correction et/ou la consigne d'actionnement corrigée est saturée, les moyens de calcul étant agencés pour
déterminer la correction en construisant une image du couple moyen (*C_{moy}*) appliqué par le frein à partir de la consigne de freinage (*F̅*) et en comparant ce couple moyen à la mesure du couple (*Cₘₑₛ*),
adapter la correction en faisant varier l'estimation du couple moyen (*C*_{moy}) pour une même consigne de freinage (*F̅*), le couple moyen (*C*_{moy}) étant estimé à partir de la consigne de freinage (*F̅*) en multipliant celle-ci par un gain (K1) de valeur réglable, et
abaisser la valeur du gain (K1) si la consigne de position corrigée et/ou la correction est saturée à une borne maximale de saturation et augmenter la valeur du gain (K1) si la consigne de position corrigée (*X̅_{corr}*) et/ou la correction est saturée à une borne minimale de saturation ;
- une sortie fournissant une somme de la consigne d'actionnement et de la correction de la consigne d'actionnement.

## Patentansprüche

1. Verfahren zur Steuerung einer Fahrzeugbremse, die dazu geeignet ist, in Antwort auf einen Betätigungssollwert eine Bremskraft auszuüben, wobei:
- ausgehend von einem Bremssollwert (*F̅*) ein nominaler Betätigungssollwert (*X̅*) für den Aktor der Bremse bestimmt wird, der alle Anteile des Bremssollwertes berücksichtigt;
- ausgehend von genau diesem Bremssollwert (*F̅*) und einer Messung des von der Bremse entwickelten Drehmoments (*Cₘₑₛ*) eine Korrektur *(x_{corr})* des nominalen Betätigungssollwertes bestimmt wird, wobei die Korrektur nur die niederfrequenten Entwicklungen des Bremssollwertes berücksichtigt;
- die Korrektur zu dem nominalen Sollwert addiert wird, um einen korrigierten Betätigungssollwert (*X̅_{corr}*) zu erhalten;
wobei die Korrektur angepasst wird, um derzeitige oder zukünftige Funktionsbedingungen zumindest der genannten Bremse oder von Bremsen, die dem gleichen Bremssollwert unterzogen werden, zu berücksichtigen, um Funktionsphasen, während derer die Korrektur und/oder der korrigierte Betätigungssollwert (8, 21) gesättigt ist, zu begrenzen, wobei zum Bestimmen der Korrektur ein Bild des mittleren Drehmoments (*C_{moy}*) erstellt wird, das von der Bremse ausgehend von dem Bremssollwert (*F̅*) ausgeübt wird, und dieses mittlere Drehmoment mit der Messung des Drehmoments (*Cₘₑₛ*) verglichen wird,
wobei die Anpassung der Korrektur dadurch erfolgt, dass die Schätzung des mittleren Drehmoments (*C_{moy}*) für einen selben Bremssollwert (*F̅*) variiert wird, wobei das mittlere Drehmoment (*C_{moy}*) ausgehend von dem Bremssollwert (*F̅*) geschätzt wird, indem dieser mit einer Verstärkung (K1) mit einstellbarem Wert multipliziert wird,
**dadurch gekennzeichnet, dass**
wenn der korrigierte Positionssollwert und/oder die Korrektur mit einer oberen Sättigungsgrenze gesättigt ist, der Wert der Verstärkung (K1) herabgesetzt wird, und
wenn der korrigierte Positionssollwert (*X̅_{corr}*) und/oder die Korrektur mit einer unteren Sättigungsgrenze gesättigt ist, der Wert der Verstärkung (K1) erhöht wird.

2. Verfahren nach Anspruch 1, wobei die Verstärkung (K1) in Abhängigkeit von Parametern angepasst wird, die repräsentativ für eine zukünftige Bremsung sind.

3. Verfahren nach Anspruch 2, wobei die Verstärkung (K1) in Abhängigkeit der durchschnittlichen Anfangstemperatur der Bremsen des Luftfahrzeugs und/oder der Geschwindigkeit und der Masse des Luftfahrzeugs angepasst wird.

4. Verfahren nach Anspruch 1, wobei die Verstärkung (K1) in Abhängigkeit von Disparitäten der Anfangsbedingungen der verschiedenen Bremsen angepasst wird, die denselben Bremssollwert empfangen.

5. Verfahren nach Anspruch 4, wobei die Verstärkung (K1) angepasst wird, um vorzugsweise die Bremsen, die am wenigsten heiß sind oder die am wenigstens dazu neigen, sich zu erhitzen, zu beanspruchen.

6. Vorrichtung zum Durchführen des Verfahrens nach einem der vorhergehenden Ansprüche, umfassend:
- einen Eingang zum Empfangen eines Bremssollwerts (*F̅*);
- einen Eingang zum Empfangen einer Messung des von der Bremse erzeugten Drehmoments (*Cₘₑₛ*);
- Rechenmittel zum Berechnen eines nominalen Betätigungssollwertes (*X̅*) für den Aktor der Bremse ausgehend von dem Bremssollwert (*F̅*);
- Rechenmittel zum Berechnen einer Korrektur *(x_{corr})* des nominalen Betätigungssollwertes ausgehend von dem Bremssollwert(*F̅*) und der Messung des Drehmoments (*Cₘₑₛ*)*,* wobei nur die niederfrequenten Entwicklungen des Bremssollwertes berücksichtigt werden, wobei die Rechenmittel zum Berechnen der Korrektur derzeitige und zukünftige Funktionsbedingungen zumindest der Bremse oder von Bremsen berücksichtigen, die denselben Bremssollwert empfangen, um die Korrektur so anzupassen, dass Funktionsphasen, während denen die Korrektur und/oder der korrigierte Betätigungssollwert gesättigt ist, begrenzt werden, wobei die Rechenmittel derart ausgebildet sind, dass sie die Korrektur bestimmen, indem ein Bild des mittleren Drehmoments (*C_{moy}*) erstellt wird, das von der Bremse ausgehend von dem Bremssollwert (*F̅*) ausgeübt wird, und dieses mittlere Drehmoment mit der Messung des Drehmoments (*Cₘₑₛ*) verglichen wird,
sie die Korrektur anpassen, indem die Schätzung des mittleren Drehmoments (*C_{moy}*) für einen selben Bremssollwert (*F̅*) variiert wird, wobei das mittlere Drehmoment (*C_{moy}*) ausgehend von dem Bremssollwert (*F̅*) geschätzt wird, indem dieser mit einer Verstärkung (K1) mit einstellbarem Wert multipliziert wird, und
sie den Wert der Verstärkung (K1) herabsetzen, wenn der korrigierte Positionssollwert und/oder die Korrektur mit einer oberen Sättigungsgrenze gesättigt ist, und sie den Wert der Verstärkung (K1) erhöhen, wenn der korrigierte Positionssollwert ( *X̅_{corr}*) und/oder die Korrektur mit einer unteren Sättigungsgrenze gesättigt ist;
- einen Ausgang, der eine Summe aus dem Betätigungssollwert und der Korrektur des Betätigungssollwerts liefert.

## Claims

1. A method of controlling a vehicle brake that is adapted to exert a braking force in response to an actuation setpoint, the method comprising the steps of:
· on the basis of a braking setpoint (F̅), determining a nominal actuation setpoint (X̅) for the brake actuator, taking account of all of the components of the braking setpoint;
· on the basis of the same braking setpoint (F̅), and of a measurement of the torque (Cₘₑₛ) developed by the brake, determining a correction (x_{corr}) for the nominal actuation setpoint, the correction taking account only of low frequency variations in the braking setpoint;
· adding the correction to the nominal setpoint in order to get a corrected actuation setpoint (X̅_{corr}),
the correction being adapted to take account of the actual or future operating conditions of at least said brake or of the brakes that are subjected to the same braking setpoint in order to limit operating stages in which the correction and/or the corrected actuation setpoint (8;21)is saturated,
wherein, in order to determine the correction, an image of the mean torque (Cₘₑₐₙ) applied by the brake is constructed from the braking setpoint (F̅), and the mean torque is compared with the measured torque (Cₘₑₛ), wherein the correction is adapted by causing the estimated mean torque (Cₘₑₐₙ) to vary for a given braking setpoint (F̅),
wherein the mean torque (Cₘₑₐₙ) is estimated from the braking setpoint (F̅) by multiplying the braking setpoint by a gain (K1) of adjustable value,
**Characterized in that** if the corrected actuation setpoint and/or the correction is saturated at a maximum saturation limit, the value of the gain (K1) is lowered, and
if the corrected actuation setpoint (X̅_{corr}) and/or the corrector is saturated at a minimum saturation limit, the value of tha gain (K1) is increased.

2. A method according to claim 1, wherein the gain (K1) is adapted as a function of parameters representative of future braking.

3. A method according to claim 2, wherein the gain (K1) is adapted as a function of the mean initial temperature of the brakes of the aircraft and/or of the speed and the mass of the aircraft.

4. A method according to claim 1, wherein the gain (K1) is adapted as a function of the disparities between the initial conditions of the various brakes receiving the same braking setpoint.

5. A method according to claim 4, wherein the gain (K1) is adapted by making greater use of the brakes that are cooler or less likely to be heated.

6. Apparatus for implementing the method according to any preceding claim, the apparatus comprising:
· an input for receiving a braking setpoint (F̅);
· an input for receiving a measurement of the torque (Cₘₑₛ) generated by the brake;
· calculation means for responding to the braking setpoint (F̅) to calculate a nominal actuation setpoint (F̅) for the brake actuator;
· calculation means for responding to the braking setpoint (F̅) and to the measured torque (Cₘₑₛ) to calculate a correction (x_{corr}) of the nominal actuation setpoint that takes account only of low frequency variations in the braking setpoint, the means for calculating the correction taking account of the actual or future operating conditions at least of the brake, or of the brakes that receive the same braking setpoint; for adapting the correction in order to limit the operating stages in which the correction and/or the corrected actuation setpoint is saturated, the calculation mean being arranged for:
determining the correction by constructing an image of the mean torque (Cₘₑₛ) applied by the brake from the braking setpoint (F̅), and by comparing said mean torque to the measured torque (Cₘₑₛ),
adapting the correction by causing the estimated mean torque (Cₘₑₛ) to vary for a given braking setpoint (F̅),
the mean torque (C_{moy}) being estimated from the braking setpoint (F̅) by multiplying the braking setpoint by a gain (K1) of adjust the value, and
lowering the value of the gain (K1) if the corrected actuation setpoint and/or the correction is saturated at a maximum satuation limit and increasing the value of the gain (K1) if the corrected actuation setpoint (x_{corr}) and/or the correction is saturated at a minimum saturation limit and,
· an output delivering the sum of the actuation setpoint plus the actuation setpoint correction.
